# EUROPÄISCHE PATENTANMELDUNG

(11) **EP 4 686 742 A1**
(43) Veröffentlichungstag der Anmeldung: **04.02.2026**
(21) Anmeldenummer: 24192281.4
(22) Anmeldetag: 01.08.2024
(51) Int. Cl.: C08L 91/06, C10M 109/02

(54) **POLAR-MODIFIZIERTE MAISWACHSE UND DEREN VERESTERUNGS- ODER VERSEIFUNGSPRODUKTE**

(71) Anmelder: CLARIANT INTERNATIONAL LTD, 4132 Muttenz (CH)
(72) Erfinder: KRATZER, Philipp, 86637 Binswangen (DE)
(74) Vertreter: Zusammenschluss Clariant

(57) **Zusammenfassung**

Die Erfindung betrifft polar-modifizierte Maiswachse und deren veresterte oder verseifte Derivate, sowie deren Herstellung und deren Verwendung für Beschichtungen und als Kunststoffverarbeitungshilfsmittel.

## Beschreibung

Die Erfindung betrifft ein helles, polar-modifiziertes Maiswachs, ein Verfahren zur Herstellung dieser Oxidationsprodukte von Maiswachs und deren Verwendung zu land- oder forstwirtschaftlichen Zwecken, als Additiv in der Kunststoffverarbeitung, in Pflegemitteln, in Druckfarben und/oder in Lacken und Beschichtungen. Gegenstand sind auch verseifte sowie veresterte polar-modifizierte Maiswachse, hergestellt durch die Verseifung bzw. Veresterung der erfindungsgemäßen polar-modifizierten Maiswache.

Die Zusammensetzung von Maiswachsen wurde erstmals von Shriner et. al beschrieben (Shriner et. AI "The composition of corn wax", JACS, 1927 (49), 1290-1294).

In einer neueren Veröffentlichung analysieren Kang et al. die physiochemischen Eigenschaften von Maiswachs und vergleichen sie mit denen anderer Wachse (Kang, B, Liu, Y, Yang, R, Liang, S. Composition and physicochemical properties of corn wax. J Am Oil Chem Soc. 2023; 100(10): 783-790 https://doi.org/10.1002/aocs.12717). Demnach besitzen Maiswachsester höhere Kettenlängen als andere Naturwachse wie Reiswachs, Sonnenblumenwachs oder Candellilawachs. Die Säurezahl von rohem Maiswachs liegt unter 2 mg KOH/g, da der Anteil an freien Fettsäuren im Wachs sehr gering ist.

Neben den Wachsestern und den freien Fettsäuren enthält ein Naturwachs und damit auch Maiswachs weitere Bestandteile wie Phosphorlipide und Sterylester. Weitere als "Mindermengen-Bestandteile" anzusehende variable Bestandteile des Maiswachses sind die nicht näher spezifizierten "Dunkelstoffe", Squalen sowie der sogenannte "Gum-Anteil". Diese Komponenten führen meist zu einer in Farbe und Anwendbarkeit schwankenden und schwer zu reproduzierenden Produktqualität.

Durch Raffinationsverfahren, wie beispielsweise die klassische Bleichung mit Wasserstoffperoxid, werden die Dunkelstoffe im Naturwachs reduziert und die Säurezahl kann geringfügig ansteigen, entspricht aber weiterhin weitgehend der des Ausgangswachses. Beim Maiswachs übersteigt sie den Wert von 8 mg KOH/g nicht. Wasserstoffperoxid-gebleichte Naturwachse sind gelblich und entsprechen in ihrem Estergehalt weitgehend dem Ausgangswachs. Wasserstoffperoxid-gebleichte Typen werden überwiegend als entölte und raffinierte Naturwachse am Markt angeboten, zeigen jedoch, da die gebleichten Mindermengen-Bestandteile im Produkt verbleiben, ebenfalls schwankende Produktqualität.

Die Einsatzgebiete für Naturwachse sind vielfältig. So werden Wachse für Polituren, Beschichtungen, in Druckfarben und/oder Lacken sowie für land- oder forstwirtschaftliche Zwecke verwendet. Ein großer Anteil wird bei der Kunststoffverarbeitung als Prozesshilfmittel eingesetzt. Dort dienen die Wachse als Entgasungs-, Verlaufs-, Gleit-, Entformungs- und/oder Dispergierungshilfsmittel für Kunststoffe und müssen den hohen Temperaturen standhalten, die zum Aufschmelzen eines Kunststoffes angewendet werden. Die Wachse verbleiben im Kunststoff. Dementsprechend sind solche Wachse für die Kunststoffverarbeitung besonders geeignet, die eine möglichst hohe Thermostabilität, eine möglichst geringe Färbung, eine niedrige Viskosität und einen niedrigen Tropfpunkt aufweisen und die optimalerweise möglichst nachhaltig herstellbar sind. Weiterhin können Naturwachse in Beschichtungen eingesetzt werden, wie sie beispielsweise im Agrar- und Lebensmittelbereich verwendet werden. Als Beispiele sind Frucht-, Saatgut-, Süßigkeiten- und Düngemittelbeschichtungen zu nennen.

Die rohen und gebleichten Naturwachse sind jedoch nur teilweise für solche Zwecke geeignet, da sie die oben beschriebene schwankende Produktqualität aufweisen und auf Grund ihrer chemischen Eigenschaften nicht oder nur bedingt für die beschriebenen Einsatzgebiete geeignet sind. Aus diesem Grund wurden Oxidationsverfahren für Naturwachse entwickelt, die die Wachse bleichen, störende Bestandteile entfernen und die Polarität der Wachse verändern, um sie an die jeweilige Anwendung anzupassen.

Die Oxidation von fossilen und nicht-fossilen Naturwachsen mit Chromschwefelsäure ist seit Anfang des 20. Jahrhunderts bekannt und wird technisch anhand von fossilen Montanwachsen seit 1927 im heute noch betriebenen "Gersthofener Verfahren" durchgeführt. Neben fossilem Montanwachs lassen sich mit Hilfe dieser Chromsäurebasierten Verfahren auch nachwachsende Naturwachse, wie z. B. Carnaubawachs und Candelillawachs oxidieren. Ein Verfahren zur Chromsäureoxidation von Carnaubawachs wird in DE-A 10231886 beschrieben. Naturbelassene Carnauba-Wachse (fettgrau, Typ 4; mittelgelb, primagelb und flor, Typen 3 bis 1) und Roh-Montanwachs (schwarz) sind deutlich dunkel gefärbt. Die Oxidation mit Chromschwefelsäure führt zu helleren Wachsprodukten.

Oxidationsprodukte von Reiskleiewachs und deren Folgeprodukte sind aus der EP-A 2909273 aus 2015, sowie aus der EP-A 3808819 und der EP-A 3808820 aus 2019 bekannt. Sie werden durch Oxidation mit Chromschwefelsäure hergestellt. Hierdurch können Säurewachse über einen breiten Säurezahlbereich hergestellt werden. Diese können im Anschluss mit einem basischen Metallsalz teil- bzw. vollverseift werden, oder mit einem mono- oder polyvalenten Alkohol verestert werden.

Mit Chromschwefelsäure hergestellte Oxidationsprodukte des Maiswachses und deren Veresterungsprodukte werden in der WO-A 2022 207517 beschrieben. Diese sind ebenfalls hell, aber härter und spröder als luftoxidierte Maiswachse was ihre Einsatzmöglichkeiten für Frucht- Saatgut- und Düngemittelbeschichtungen reduziert. Zudem weisen sie in Abhängigkeit von der Säurezahl eine mäßige Thermostabilität auf.

Bei der Oxidation eines Reis- oder Maiswachses mit Chromsäure kommt es im Wesentlichen zu einer Spaltung der Wachsester sowie einer *in*-*situ*-Oxidation der entstandenen Wachsalkohole zu Wachssäuren. Die Höhe der Säurezahl ist ein Maß für den Gehalt an freien Wachssäuren. Die typischen Umsätze solcher Oxidationen liegen im Bereich von 10-90% bezüglich der Estergruppen. Die auf diese Weise gebleichten Naturwachse besitzen zusätzlich zur gewünschten Aufhellung eine höhere Verseifungszahl und Säurezahl als die ungebleichten Wachse, wobei die Erhöhung der Verseifungszahl fast immer geringer ist als die der Säurezahl. Nur bei sehr niedrigen Säurezahlen ist Erhöhung der Verseifungszahl größer als die der Säurezahl.

Die Oxidation mit Chromschwefelsäure ist aus ökologischen Gründen bedenklich, da als Nebenprodukt große Mengen an Cr(III)-Verbindungen anfallen, welche entweder bei der in der Kritik stehenden Chromgerbung verwendet werden oder energieintensiv elektrochemisch recycelt werden müssen. Um diese problematischen Salze zu vermeiden, ist es wünschenswert, ein über ein alternatives Oxidationsverfahren hergestelltes Produkt mit einer sehr guten Helligkeit, einer stabilen Produktqualität und für die jeweilige Anwendung geeignete Eigenschaften bereitzustellen, bei dem die Umweltbelastung auf ein Mindestmaß reduziert wird.

DE-A 25 46 791 offenbart die Herstellung von Naturwachsen für Kohlewachspapiere, wobei die Naturwachse mit Luftsauerstoff behandelt werden. Bei dieser Art der Behandlung kommt es zu keiner Erhöhung der Säurezahl des Naturwachses und damit zu keiner polaren Modifikation. Zusätzlich wird durch die Behandlung der Tropfpunkt des Wachses erhöht, was darauf hindeutet, dass teilweise niedrigschmelzende Minderbestandteile bei diesem Verfahren mit dem Gasstrom ausgetrieben werden. Diese Art der Raffination verbesserte die Helligkeit jedoch nur geringfügig. Für die Verwendung von Kohlepapieren ist die Helligkeit eines Wachses nebensächlich, da dunkle Farben, insbesondere schwarz, bevorzugt sind.

WO-A 2017 108 542 offenbart die Oxidation von Reiswachs mit Luftsauerstoff. Die beschriebenen polar-modifizierten Reiswachse weisen Yellowness Indizes größer 50 auf und sind damit als Prozesshilfsmittel in hellen, farblosen oder transparenten Kunststoffen schlecht geeignet, da sie unerwünschte Verfärbungen verursachen. Auch in Beschichtungszusammensetzungen und den entsprechenden Lacken sind Verfärbungen durch ein Additiv unerwünscht. Die Thermostabilität spielt für die beschriebenen Anwendungen keine Rolle, da vornehmlich auf die Herstellung von Dispersionen eingegangen wird.

Es besteht somit ein großer Bedarf nach nachhaltiger hergestellten Naturwachsen und deren Derivaten, die eine gute Thermostabilität, eine niedrige Viskosität, gute Gleiteigenschaften und eine geringe Eigenfarbe aufweisen, um sie beispielsweise zur Kunststoffverarbeitung oder für Beschichtungen einzusetzen. Weiterhin sind auch Entformungshilfsmittel und Beschichtungsadditive auf Basis von Derivaten solcher Wachse erwünscht.

Überraschenderweise wurde nun gefunden, dass sich helle, luftoxidierte Maiswachse mit variabler Polarität (im Folgenden als polar-modifiziertes Maiswachs (O) bezeichnet) und deren Derivate effizient herstellen lassen und im Vergleich zu bekannten luftoxidierten Wachsen, wie beispielsweise Reiskleiewachs deutlich verbesserte Eigenschaften aufweisen, da sie härter und thermostabiler sind.

Auch im Vergleich zu mit Chromschwefelsäure-oxidierten Maiswachsoxidaten weisen sie gewisse Vorteile auf. Die polar-modifizierten Maiswachse sind etwas weicher, was die geringere Nadelpenetrationszahl ausdrückt. Damit erschließen die polar-modifizierten Maiswachse, die mit Sauerstoff oxidiert wurden, einen Härtebereich, der insbesondere in Kombination mit der hellen Farbe, weder mit den bekannten luftoxidierten Naturwachsen noch mit den chromschwefelsäureoxidierten Naturwachsen erreicht werden konnte. Naturwachse, die im Vergleich zu den Chromschwefelsäure-oxidierten Produkten weicher sind, aber noch eine größere Härte als die herkömmlichen luftoxidierten Naturwachse aufweisen, sind besser als Grundstoff für nachhaltige, biologisch abbaubare Beschichtungen, wie beispielsweise Frucht- und Saatgutbeschichtungen geeignet, da sie aufgrund ihrer Flexibilität leichter einen geschlossenen Film bilden.

Gegenstand der Erfindung ist daher ein polar-modifiziertes Maiswachs (O), das durch Oxidation mit einem Sauerstoff-haltigem Gas herstellbar ist und das eine Nadelpenetrationszahl (NPZ), gemessen nach DIN 51579 größer 5, bevorzugt zwischen 7 und 35, besonders bevorzugt zwischen 8 und 20 aufweist, wobei durch die Oxidation die Säurezahl und die Verseifungszahl des Maiswachses (E) erhöht werden.

Bevorzugt ist das polar-modifizierte Maiswachs (O) dadurch gekennzeichnet, dass die Oxidation mit einem Sauerstoff-haltigem Gas eine Erhöhung der Verseifungszahl bewirkt, die die Erhöhung der Säurezahl um mindestens den Faktor 1,3, bevorzugt um mindestens den Faktor 1,5, besonders bevorzugt um mindestens den Faktor 1,7 übersteigt.

Weiterhin weist das polar-modifizierte Maiswachs (O) eine IFZ gemessen nach DIN 6162 kleiner 35 auf, bevorzugt kleiner 20, besonders bevorzugt kleiner 15 auf, denn polar modifizierte Wachse mit einer solchen lodfarbzahl sind besonders für hellfarbige oder transparente Kunststoffe und Beschichtungen geeignet.

Vorzugsweise ist der Yellowness Index (YI), gemessen nach ASTM E 313 - 20, der die Gelbfärbung einer Substanz beschreibt, kleiner 70, bevorzugt kleiner 50, besonders bevorzugt kleiner 40.

Bevorzugt ist das polar-modifizierte Maiswachs (O) dadurch gekennzeichnet, dass es einen Tropfpunkt zwischen 50 und 80 °C, bevorzugt zwischen 60 und 78 °C, gemessen nach ISO 2176, aufweist.

Vorzugsweise ist die Säurezahl des polar-modifizierten Maiswachses (O) (nach ISO 2114) größer als 3 mg KOH/g, bevorzugt größer als 4 mg KOH/g, besonders bevorzugt größer als 8 mg KOH/g und ganz besonders bevorzugt größer als 10 mg KOH/g.

Für die Verwendung als Kunststoffadditiv besitzt das polar-modifizierte Maiswachs (O) vorzugsweise eine Säurezahl (nach ISO 2114) von 3 - 140 mg KOH/g, bevorzugt zwischen 4 und 80 mg KOH/g, besonders bevorzugt zwischen 8 und 60 mg KOH/g, ganz besonders bevorzugt zwischen 10 und 40 mg KOH/g. Polar modifizierte Maiswachse im Sinne der Erfindung, die niedrige Säurezahlen aufweisen eignen sich besonders gut als Verarbeitungshilfsmittel in der Kunststoffindustrie, da sie eine hohe Thermostabilität und eine hohe Härte ausgedrückt durch eine niedrige Nadelpenetrationszahl, aufweisen.

Bevorzugt weist das polar-modifizierte Maiswachs (O), das als Verarbeitungshilfsmittel verwendet wird, eine Verseifungszahl (nach ISO 3681) zwischen 90 und 285 mg KOH/g, bevorzugt zwischen 100 und 180 mg KOH /g, besonders bevorzugt zwischen 100 und 150 mg KOH/g auf

Für die Verwendung in Beschichtungszusammensetzungen ist das polar-modifizierte Maiswachs (O) mit höheren Säurezahlen zwischen 20 und 140 mg KOH/g bevorzugt. Besonders bevorzugt ist in dieser Applikation ein polar-modifiziertes Maiswachs (O) mit einer Säurezahl zwischen 25 und 110 mg KOH/g, besonders bevorzugt zwischen 35 und 90 mg KOH/g, ganz besonders bevorzugt zwischen 45 und 80 mg KOH/g, denn polar modifizierte Maiswachse in diesem Säurezahlbereich weisen eine mittlere Härte und eine relativ niedrige lodfarbzahl (IFZ) auf und sind damit gut für Beschichtungen geeignet. Durch die nachhaltige und biologisch abbaubare Rohstoffquelle sind sie besonders geeignet für Frucht-, Süßigkeiten- und Saatgutbeschichtungen.

Bevorzugt weist das polar-modifizierte Maiswachs (O), das in Beschichtungszusammensetzungen verwendet wird, eine Verseifungszahl (nach ISO 3681) zwischen 110 und 285 mg KOH/g, bevorzugt zwischen 120 und 230 mg KOH /g, besonders bevorzugt zwischen 125 und 170 mg KOH/g auf

Weiterer Gegenstand der Erfindung ist ein Verfahren zur Herstellung eines polar modifizierten Maiswachses, umfassend die Schritte:
i) Bereitstellen eines nativen oder raffinierten Maiswachses (MW),
ii) Bereitstellen eines sauerstoffhaltigen Gases;
iii) Durchführen der Oxidation des Maiswachses (MW) durch Umsetzung des Maiswachses (MW) mit Luft oder Sauerstoff unter Rühren, um ein polar-modifiziertes Maiswachs (O) zu erhalten;
iv) Beenden der Umsetzung, sobald die gewünschte Säurezahl erreicht wurde, wobei durch die Oxidation die Säurezahl und die Verseifungszahl des Maiswachses (E) erhöht werden und wobei das polar-modifiziertes Maiswachs (O) eine NPZ, gemessen nach DIN 51579 größer 5, bevorzugt zwischen 7 und 20, besonders bevorzugt zwischen 8 und 16 aufweist.

Vorzugsweise wird bei Schritt (iii) des Verfahrens die Oxidation bei einer Temperatur zwischen 80 und 200°C, bevorzugt bei einer Temperatur zwischen 100 und 170°C, besonders bevorzugt bei einer Temperatur zwischen 135 und 155°C durchgeführt.

Bevorzugt werden während Schritt iii) des Verfahrenszwischen 150 und 250 Liter sauerstoffhaltiges Gas pro Stunde durchgeleitet.

Vorzugsweise wird die Oxidation in Schritt iii) des Verfahrens über einen Zeitraum von mindestens 30 Minuten, vorzugsweise über einen Zeitraum von 1 bis 25 Stunden, besonders vorzugsweise von 2 bis 10 Stunden, ganz besonders vorzugsweise von 3 bis 9 Stunden durchgeführt.

Bevorzugt werden in Schritt iii) des Verfahrenseine Rührgeschwindigkeit in Schritt iii) zwischen 100 und 1000 U/min, bevorzugt zwischen 300 und 900 U/min, besonders bevorzugt zwischen 600 und 800 U/min angewendet.

Weiterer Gegenstand der Erfindung ist ein verestertes polar modifiziertes Maiswachs (E) hergestellt durch Veresterung oder Umsetzung des oben beschriebenen polar modifizierten Maiswachses (O) mit einem Alkohol. Bevorzugte Alkohole sind mehrwertige Alkohole, beispielsweise Ethylenglykol, Butylenglykol, Glycerin, Diglycerin, Trimethylolpropan, Pentaerythritol oder Sorbitol, etc.. Bei der Veresterung wird bevorzugt ein Gewichtsverhältnis von Alkohol zu polar modifiziertem Maiswachs (O) von 1:200 bis 1:5, besonders bevorzugt von 1:150 bis 1:10, ganz besonders bevorzugt 1:120 bis 1:20 gewählt.

Bevorzugt zeichnen sich die veresterten Produkte neben der nachwachsenden Rohstoffbasis und dem Chrom-freien Oxidationsverfahren durch eine gute Thermostabilität, gemessen nach DIN 51006 (2005) mit einem Massenverlust bis zum Erreichen einer Temperatur von 300 °C (Heizrate: 5 °C/min) von kleiner 20%, bevorzugt kleiner 15% aus.

Bevorzugt haben die veresterten Produkte eine Säurezahl von kleiner als 40 mg KOH/g, besonders bevorzugt von kleiner als 30 mg KOH/g, ganz besonders bevorzugt von kleiner als 20 mg KOH/g.

Weiterer Gegenstand der Erfindung ist ein verseiftes polar-modifiziertes Maiswachs (V) hergestellt durch Verseifen des oben beschriebenen polar-modifizierten Maiswachs (O) oder des oben beschriebenen veresterten polar-modifizierten Maiswachs (E) mit einem basischen Metallsalz, ausgewählt aus der Gruppe bestehend aus Metallhydroxiden (z.B. NaOH, KOH, Ca(OH)₂ und Zn(OH)₂, etc.), Metalloxiden (z.B. CaO, etc.), Metallcarbonaten (z.B. Na₂CO₃, CaCO₃, etc.) oder mit wässrigen Laugen (wie z.B. NaOH, KOH, etc.). Bevorzugt sind Alkalimetallhydroxide und/oder Erdalkalimetallhydroxide, insbesondere NaOH, KOH und/oder Ca(OH)₂. Ganz besonders bevorzugt ist Ca(OH)₂.

Bei der Verseifung wird bevorzugt ein Gewichtsverhältnis von basischem Metallsalz zu polar-modifiziertem Maiswachs (O) von 1:100 bis 1:5, besonders bevorzugt von 1:75 bis 1:10, ganz besonders bevorzugt ein Verhältnis von 1:60 bis 1:20 gewählt.

Entsprechende allgemeine Herstellvorschriften zur Verseifung von Wachsen finden sich beispielhaft etwa in EP1010728. Bevorzugt zeichnen sich die verseiften Produkte neben der nachwachsenden Rohstoffbasis durch eine besonders gute Thermostabilität bis zum Erreichen einer Temperatur von 300 °C, gemessen nach DIN 51006 (2005) mit einem Massenverlust bis zum Erreichen einer Temperatur von 300 °C (Heizrate: 5 °C/min) von kleiner 25 Gew.-%, bevorzugt kleiner 20 Gew.-% aus. Bevorzugt haben die verseiften Produkte eine Säurezahl von kleiner als 40 mg KOH/g, besonders bevorzugt von kleiner als 30 mg KOH/g, ganz besonders bevorzugt von kleiner als 25 mg KOH/g

Bevorzugt zeichnen sich die verseiften Produkte durch einen besonders gute Langzeitthermostabilitätswert aus, gemessen nach DIN 51006 (2005), der bestimmt wird, nachdem die Temperatur von 300 °C (Heizrate: 5 °C/min) erreicht und dann für 30 min bei 300°C gehalten wurde. Hier beträgt der Massenverlust weniger als 50 Gew.%, bevorzugt weniger 40 Gew.-%, besonders bevorzugt weniger 30 Gew.-%.

Ebenfalls Gegenstand der Erfindung ist die Verwendung des erfindungsgemäßen polar-modifizierten Maiswachs (O) oder des erfindungsgemäßen verseiften polar-modifizierten Maiswachs (V) oder des erfindungsgemäßen veresterten polar-modifizierten Maiswachs (E) zu land- oder forstwirtschaftlichen Zwecken, als Additiv in der Kunststoffverarbeitung, in Pflegemitteln, in Druckfarben und/oder in Lacken.

In einer bevorzugten Verwendung wird das erfindungsgemäße polar-modifizierte Maiswachs (O), insbesondere das polar-modifizierte Maiswachs (O) welches eine Säurezahl, gemessen nach ISO 2114, zwischen 3 - 140 mg KOH/g, bevorzugt zwischen 4 und 80 mg KOH/g, besonders bevorzugt zwischen 8 und 60 mg KOH/g, ganz besonders bevorzugt zwischen 10 und 40 mg KOH/g., und/oder eine Verseifungszahl, gemessen nach ISO 3681, zwischen 90 und 285 mg KOH/g, bevorzugt zwischen 100 und 180 mg KOH /g, besonders bevorzugt zwischen 100 und 150 mg KOH/g aufweist, oder das verseifte oder veresterte erfindungsgemäße polar-modifizierte Maiswachs ((V) oder (E)) als Entgasungs-, Verlaufs-, Gleit- und/oder Dispergierungshilfsmittel für Kunststoffe eingesetzt.

In einer anderen bevorzugten Verwendung wird das erfindungsgemäße polar-modifizierte Maiswachs (O)welches eine Säurezahl, gemessen nach ISO 2114, zwischen 20 - 140 mg KOH/g, bevorzugt zwischen 25 und 110 mg KOH/g, besonders bevorzugt zwischen 35 und 90 mg KOH/g, ganz besonders bevorzugt zwischen 45 und 80 mg KOH/g und/oder eine Verseifungszahl, gemessen nach ISO 3681, zwischen 110 und 285 mg KOH/g, bevorzugt zwischen 120 und 230 mg KOH /g, besonders bevorzugt zwischen 125 und 170 mg KOH/g aufweist, als Beschichtungsadditiv, bevorzugt als Beschichtungsadditiv für Agrar- und Lebensmittelbeschichtungen eingesetzt.

Ein weiterer Erfindungsgegenstand ist die Verwendung von Maiswachs (MW) zur Herstellung eines polar-modifizierten Naturwachses durch Oxidation mit Luft oder Sauerstoff

### Substanzcharakterisierung

Die in Tabelle 1 aufgeführten Standardmethoden dienen zur Bestimmung der Kennzahlen von natürlichen und synthetischen Wachsen und der Kennzahlen von Druckfarben, Lacken und Beschichtungen. Sie werden zur Charakterisierung der erfindungsgemäßen polar-modifizierten Maiswache, ihrer Ausgangsprodukte und der Vergleichssubstanzen verwendet.

**Tabelle 1: Methodenübersicht**

| | Methode |
|---|---|
| Säurezahl (SZ) [mg KOH/g] | ISO 2114 (2002) |
| Verseifungszahl (VZ) [mg KOH/g] | ISO 3681 (2019) |
| Tropfpunkt (TP) [°C] | ISO 2176 (1997) |
| Hydroxylzahl (OHZ) [mg KOH/g] | DGF M-IV 6 |
| Olgehalt (OG) [Gew.-%] | AOCS Ja 4-46 (2017) |
| Thermogravimetrische Analyse (TGA), [Gew.-%]/ [Gew.-%] | DIN 51006 (2005) |
| | von 25 bis 300°C bei 5K/min, dann 30min bei 300 °C. |
| | Messung des Masseverlusts bei Erreichen von 300 °C / und nach 30 min bei 300 °C |
| lodfarbzahl (IFZ) | DIN 6162 (2014) |
| Yellowness-Index (YI) | ASTM E 313 - 20 |
| Ca-Gehalt (CaG) [Gew.-%] | DGF M-IV 4 (1963) |
| Nadelpenetrationszahl (NPZ) [mm⁻¹] | DIN 51579 (2010) |

Zur weiteren Charakterisierung der erfindungsgemäßen polar-modifizierten Maiswachse (O) dient die Bestimmung der Kettenlängenverteilungen seiner Bestandteile mittels Gaschromatographie. Als Vergleichssubstanzen dienten Wachssäuren und Wachsalkohole mit Kohlenstoffkettenlängen zwischen C6 und C36.

Wachsester mit C44 bis C58 wurden durch Kombination der Modellsubstanzen dargestellt. Um die Peaks der Gaschromatogramme der Maiswachse zu identifizieren, wurde zu einer Wachsprobe jeweils eine definierte Menge der einzelnen Komponenten zugegeben und eine deutliche Zunahme der Fläche des entsprechenden Peaks beobachtet. Die Messbedingungen sind in Tabelle 2 dargestellt.

**Tabelle 2**

| Säule | Agilent Technologies HP-1 (DB-1) Length 15m I.D.0,25mm Film 0,10µm |
|---|---|
| Detektor | 310°C FID |
| Injektor | 300°C Split 1:100 |
| Trägergas | Helium |
| Lösungsmittel | Toluol |
| Konzentration | 30mg/ml |
| Injektionsmenge | 1µl |
| Temperaturprogramm | 40 bis 320°C 5K/min; 50min bei 320°C halten |

Als Rohstoffe wurden zwei verschiedene Maiswachse (MW 1 und MW 2) und zwei Reiskleiewachse (RBW 1 und RBW 2), jeweils im Rohzustand und als raffiniertes Wachs eingesetzt. Die Eigenschaften der Maiswachse und der Reiskleiewachse im Rohzustand und als raffiniertes Wachs sind in Tabelle 3 dargestellt.

Die Reiskleiewachse wurden derart gewählt, dass deren Säurezahlen, Verseifungszahlen und Ölgehalte Werte aufweisen, die zwischen denen der eingesetzten Maiswachse liegen.

**Tabelle 3 (Methoden, Abkürzungen und Einheiten in Tabelle 1)**

| Naturwachs | SZ | VZ | TP | SP | SE | IFZ | YI | NPZ | OG | TGA |
|---|---|---|---|---|---|---|---|---|---|---|
| MW 1 (roh) | 2,0 | 80,1 | 78 | 81 | -219 | > 120 | 91 | 4 | 2,4 | 2,3 / 17,9 |
| MW 2 (raffiniert) | 7,1 | 90,0 | 77 | 80 | -203 | 80 | 34 | 4 | 9,7 | 5,4 / 20,0 |
| RBW 1* (raffiniert) | 6,0 | 88,0 | 74 | 78 | -178 | 101 | 76 | 6 | 8,5 | 3,5 / 14,0 |
| RBW 2* (roh) | 4,0 | 84,0 | 76 | 80 | -184 | > 120 | 260 | 6 | 4,3 | 3,4 / 16,6 |

| | | | | | | | | | | |
|---|---|---|---|---|---|---|---|---|---|---|
| *Vergleichsbeispiel | | | | | | | | | | |

### Beispiele 1 - 8: Modifizierung von Wachsen durch Oxidation mit Luft

500 g eines der in Tabelle 1 genannten Wachses wurde in einem mit Rührwerk und Innenthermometer ausgestatteten Glasgefäß aufgeschmolzen. Unter Rühren bei einer Rührgeschwindigkeit von 750 U/min wurde bei einer Temperatur von 145 °C bei Atmosphärendruck ein Luftstrom von 200 Liter pro Stunde eingeleitet. In geeigneten zeitlichen Abständen wurde eine Probe entnommen und deren Säurezahl bestimmt. Sobald der gewünschte Wert erreicht war, wurde die Wachsschmelze ausgegossen.

**Tabelle 4**

| Beispiel | 1 | 2 | 3 | 4 | 5 |
|---|---|---|---|---|---|
| MW 1 [g] | 500 | 500 | 500 | 500 | 500 |
| MW 2 [g] | | | | | |
| RBW 1 [g] | | | | | |
| RBW 2 [g] | | | | | |
| Reaktionsdauer [h] | 1 | 3 | 6 | 8 | 21 |

| Eigenschaften der oxidierten Produkte (Methoden, Abkürzungen und Einheiten in Tabelle 1) | | | | | |
|---|---|---|---|---|---|
| SZ | 4.5 | 9 | 29 | 48 | 100 |
| VZ | 95 | 101 | 136 | 160 | 268 |
| OHZ | 10 | 12 | 22 | 22 | 23 |
| TP | 77 | 76 | 73 | 72 | 63 |
| TGA | 4.9/ 27.8 | 7.0/ 33.3 | 13.0/ 35.2 | 16.8/ 37.2 | 26.9/ 51.0 |
| IFZ | 10 | 5 | 5 | 8 | 15 |
| YI | 36 | | 18 | 29 | |
| NPZ | 5.5 | 6.0 | 9.0 | 17.5 | n.d. |

**Tabelle 4 (Fortsetzung)**

| Beispiel | 6 | 7* | 8* |
|---|---|---|---|
| MW 1 [g] | | | |
| MW 2 [g] | 500 | | |
| RBW 1 [g] | | | 500 |
| RBW 2 [g] | | 500 | |
| Reaktionsdauer [h] | 7 | 13 | 4 |
| SZ | 47 | 16 | 30 |
| VZ | 156 | - | - |
| OHZ | - | - | - |
| TP | 74 | | |
| TGA | 18,1/ 37,4 | 22,2/4 2,1 | 30,1/5 9,3 |
| IFZ | 1,6 | > 120 | 41 |
| YI | 10 | 243 | 61 |
| NPZ | 8 | 25 | 31 |

Den Beispielen 1 bis 8 lässt sich entnehmen, dass erfindungsgemäßen polar-modifizierten Maiswachse (O) hergestellt werden könnten, die hell sind, eine gute Thermostabilitäten besitzen und eine angemessene Härte aufweisen.

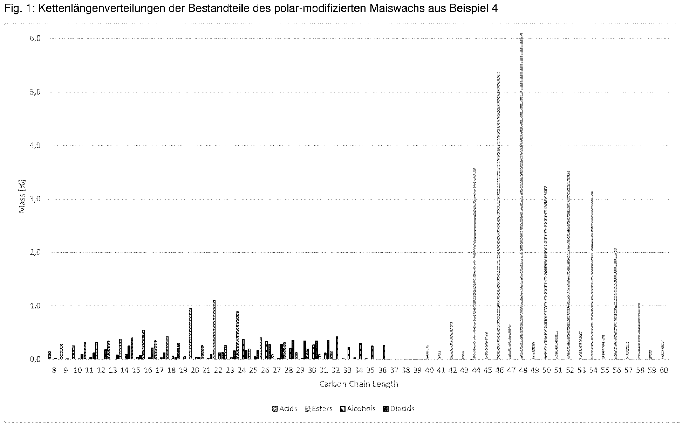

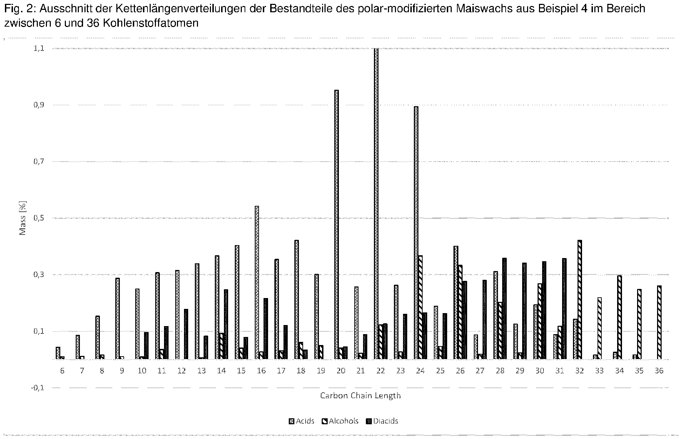

Die Kettenlängenverteilungen der Bestandteile des polar-modifizierten Maiswachs aus Beispiel 4 mittels Gasgromatografie analysiert und in Fig. 1 und Fig. 2 dargestellt.

### Beispiele 9 bis 11: Verseifung der polar-modifizierten Maiswachse

In einem 1 L Reaktionsgefäß mit Rührer, Temperaturfühler, Tropftrichter und Rückflusskühler werden die erfindungsgemäßen, polar-modifizierten Maiswachse aus den Beispielen 3 und 4 unter Stickstoffatmosphäre aufgeschmolzen und mit der in Tabelle 5 angegebenen Menge Ca(OH)2 versetzt. Das Reaktionsgemisch wird bis zum Erreichen der angegebenen Säurezahl gerührt und anschließend die Reaktionsmischung im heißen Zustand druckfiltriert.

**Tabelle 5**

| Beispiel | 9 | 10 | 11 |
|---|---|---|---|
| Polar-mod. Maiswachs (O) Beispiel 3 [g] | 500 | | |
| Polar-mod. Maiswachs (O) Beispiel 4 [g] | | 500 | 500 |
| Ca(OH)₂ [g] | 9.4 | 14.3 | 19.7 |
| Reaktionsdauer [min] | 50 | 60 | 70 |
| Reaktionstemperatur [°C] | 115 | 115 | 115 |

| Eigenschaften der oxidierten Produkte (Methoden, Abkürzungen und Einheiten in Tabelle 1) | | | |
|---|---|---|---|
| SZ | 8 | 20 | 9 |
| VZ | 106 | 137 | 122 |
| TP | 77 | 72 | 75 |
| TGA | 9.88/19.38 | 15.55/25.65 | 13.45/24.25 |
| CaG | 0.89 | 1.09 | 1.77 |
| NPZ | 5.5 | 8.0 | 4.5 |
| YI | 53 | 52 | 60 |

Aus den Beispielen 9 bis 11 ist zu erkennen, dass durch Verseifung der polar-modifizierten Maiswachse mit Ca(OH)₂ verseifte Produkte mit niedrigen Säurezahlen kleiner gleich 20 mg KOH/g hergestellt werden können, die sich insbesondere für Anwendungen eignen, die eine hohe Thermostabilität erforderlich machen.

### Beispiele 12 bis 15: Veresterung der polar-modifizierten Maiswachse

In einem 1 L Reaktionsgefäß mit Rührer, Temperaturfühler, Tropftrichter und Rückflusskühler werden die erfindungsgemäßen, polar-modifizierten Maiswachse aus den Beispielen 3 bzw. 4 unter Stickstoffatmosphäre aufgeschmolzen und mit der in Tabelle 6 angegebenen Menge an Alkohol sowie 0,4 g Methansulfonsäure versetzt. Das Reaktionsgemisch wird bis zum Erreichen der angegebenen Säurezahl gerührt, das gebildete Wasser abdestilliert und anschließend die Reaktionsmischung im heißen Zustand druckfiltriert.

**Tabelle 6**

| | | | | |
|---|---|---|---|---|
| Beispiel | 12 | 13 | 14 | 15 |
| Polar-mod. | 200 | | | |
| Maiswachs (O) | | | | |
| Beispiel 3 [g] | | | | |
| Polar-mod. | | 200 | 200 | 200 |
| Maiswachs (O) | | | | |
| Beispiel 4 [g] | | | | |
| Ethylenglykol [g] | 1,80 | 5,65 | | |
| Glycerin [g] | | | 5,70 | |
| Pentaerythrit [g] | | | | 5,90 |
| Reaktionsdauer [h] | 2 | 4 | 4 | 4 |

| Reaktionstemp. [°C] | 125 | 125 | 125 | 125 |
|---|---|---|---|---|
| Eigenschaften der veresterten Produkte (Methoden, Abkürzungen und Einheiten in Tabelle 1) | | | | |
| SZ | 13 | 14 | 16 | 14 |
| VZ | 123 | 163 | 163 | 163 |
| TP | 75 | 71 | 72 | 72 |
| TGA | 6.2 / 18.6 | 10.3 / 23.4 | 9.1 / 20.5 | 9.8 / 21.6 |
| NPZ | 5.3 | 20 | 16.8 | 17.1 |

Aus den Beispielen 12 bis 15 ist zu erkennen, dass durch Veresterung der polar-modifizierten Maiswachse mit Ethylenglykol, Glycerin oder Pentaerythritol veresterte Produkte mit niedrigen Säurezahlen kleiner als 20 mg KOH/g einfach hergestellt werden können, die sich insbesondere für Anwendungen eignen, die eine hohe Thermostabilität erforderlich machen.

## Patentansprüche

1. Polar-modifiziertes Maiswachs (O) herstellbar durch Oxidation mit einem sauerstoffhaltigen Gas, wobei durch die Oxidation die Säurezahl und die Verseifungszahl des Maiswachses (MW) erhöht werden und wobei das polar-modifiziertes Maiswachs (O) eine NPZ, gemessen nach DIN 51579 größer 5, bevorzugt zwischen 7 und 35, besonders bevorzugt zwischen 8 und 20 aufweist.

2. Polar-modifiziertes Maiswachs (O) gemäß Anspruch 1, **dadurch gekennzeichnet, dass** die Erhöhung der Verseifungszahl die Erhöhung der Säurezahl um mindestens den Faktor 1,3, bevorzugt um mindestens den Faktor 1,5, besonders bevorzugt um mindestens den Faktor 1,7 übersteigt

3. Polar -modifiziertes Maiswachs (O) gemäß Anspruch 1 oder 2, **dadurch gekennzeichnet, dass** es eine IFZ gemessen nach DIN 6162 kleiner 35, bevorzugt kleiner 20, besonders bevorzugt kleiner 15 aufweist.

4. Polar-modifiziertes Maiswachs (O) gemäß mindestens einem der vorhergehenden Ansprüche, **dadurch gekennzeichnet, dass** es einen Yl, gemessen nach ASTM E 313 - 20 kleiner 70, bevorzugt kleiner 50, besonders bevorzugt kleiner 40 aufweist.

5. Polar-modifiziertes Maiswachs (O) gemäß einem oder mehreren der vorhergehenden Ansprüche, **dadurch gekennzeichnet, dass** es eine Säurezahl, gemessen nach ISO 2114, zwischen 3 - 140 mg KOH/g, bevorzugt zwischen 4 und 80 mg KOH/g, besonders bevorzugt zwischen 8 und 60 mg KOH/g, ganz besonders bevorzugt zwischen 10 und 40 mg KOH/g, aufweist.

6. Polar-modifiziertes Maiswachs (O) gemäß einem oder mehreren der Ansprüche 1-4, **dadurch gekennzeichnet, dass** es eine Säurezahl, gemessen nach ISO 2114, zwischen 20 - 140 mg KOH/g, bevorzugt zwischen 25 und 110 mg KOH/g, besonders bevorzugt zwischen 35 und 90 mg KOH/g, ganz besonders bevorzugt zwischen 45 und 80 mg KOH/g, aufweist.

7. Verfahren zur Herstellung eine polar-modifizierten Maiswachses (O) gemäß mindestens einem der vorhergehenden Ansprüche, umfassend die Schritte:
i) Bereitstellen eines Maiswachses (MW),
ii) Bereitstellen eines sauerstoffhaltigen Gases;
iii) Durchführen der Oxidation des Maiswachses (MW) durch Umsetzung des Maiswachses (MW) mit Luft oder Sauerstoff unter Rühren, um ein polar-modifiziertes Maiswachs (O) zu erhalten;
iv) Beenden der Umsetzung, sobald die gewünschte Säurezahl erreicht wurde.
wobei durch die Oxidation die Säurezahl und die Verseifungszahl des Maiswachses (E) erhöht werden und wobei das polar-modifiziertes Maiswachs (O) eine NPZ, gemessen nach DIN 51579 größer 5, bevorzugt zwischen 7 und 35, besonders bevorzugt zwischen 8 und 20 aufweist.

8. Verfahren gemäß Anspruch 7, wobei während Schritt iii) zwischen 150 und 250 Liter sauerstoffhaltiges Gas pro Stunde durchgeleitet werden.

9. Verfahren gemäß einem oder mehreren der Ansprüche 7 bis 8, wobei die Oxidation in Schritt iii) über einen Zeitraum von mindestens 30 Minuten, vorzugsweise über einen Zeitraum von 1 bis 25 Stunden, besonders vorzugsweise von 2 bis 10 Stunden, ganz besonders vorzugsweise von 3 bis 9 durchgeführt wird.

10. Verfahren gemäß einem oder mehreren der Ansprüche 7 bis 9, wobei die Rührgeschwindigkeit in Schritt iii) zwischen 100 und 1000 U/min, bevorzugt zwischen 300 und 900 U/min, besonders bevorzugt zwischen 600 und 800 U/min beträgt.

11. Verestertes polar-modifiziertes Maiswachs (E), das erhältlich ist durch Umsetzen des Maiswachsoxidats (O) gemäß mindestens einem der Ansprüche 1 bis 6 mit einem Alkohol, vorzugsweise einem mehrwertigen Alkohol, besonders vorzugsweise mit Ethylenglykol, Butylenglykol, Glycerin, Diglycerin, Trimethylolpropan, Pentaerythritol oder Sorbitol.

12. Verseiftes polar-modifiziertes Maiswachs (V), das erhältlich ist durch Verseifen des polar-modifiziertes Maiswachses (O) gemäß mindestens einem der Ansprüche 1 bis 6 oder des veresterten polar-modifizierten Maiswachses (E) gemäß Anspruch 11 mit einem basischen Metallsalz, einem Metalloxid, einem Metallcarbonat oder mit einer wässrigen Lauge, vorzugsweise mit einem Alkalimetallhydroxid und/oder Erdalkalimetallhydroxid, besonders vorzugsweise mit Ca(OH)2.

13. Verwendung des polar-modifiziertes Maiswachs (O) gemäß mindestens einem der Ansprüche 1 bis 6, des verseiften polar-modifiziertes Maiswachs (V) gemäß Anspruch 12 oder des veresterten polar-modifiziertes Maiswachs (E) gemäß Anspruch 11 zu land- oder forstwirtschaftlichen Zwecken, als Additiv in der Kunststoffverarbeitung, in Pflegemitteln, in Druckfarben und/oder in Lacken.

14. Verwendung des polar-modifiziertes Maiswachs (O) gemäß Anspruch 5 oder des verseiften polar-modifiziertes Maiswachs (V) gemäß Anspruch 12 als Entgasungs-, Verlaufs-, Gleit- und/oder Dispergierungshilfsmittel für Kunststoffe.

15. Verwendung des polar-modifiziertes Maiswachs (O) gemäß Anspruch 6 als Additiv in Beschichtungen, insbesondere als Additiv in Agrar- und Lebensmittelbeschichtungen.
